# EUROPEAN PATENT APPLICATION

(11) **EP 3 621 055 A1**
(43) Date of publication of application: **11.03.2020**
(21) Application number: 18914651.7
(22) Date of filing: 10.04.2018
(51) Int. Cl.: G09B 9/08

(54) **UNIVERSAL VIRTUAL SIMULATOR**

(71) Applicant: National Aviation Academy, 1045 Baku (AZ)
(72) Inventor: PASHAYEV, Arif Mir Jalal, Baku, AZ1000 (AZ); ASKEROV, Jahangir Jalal, Baku, AZ1000 (AZ); SAGDEEV, Roald Zinnurovich, Baku, AZ1110 (AZ); USIKOV, Daniel Alexeyevich, Newark, CA 94560 (US); SAMADOV, Adalat Soltan, Baku, AZ1096 (AZ); HAZARKHANOV, Anvar Tapdig, Sumqayit, AZ5000 (AZ); KARIMLI, Toghrul Isa, Baku, AZ1104 (AZ); KARIMOV, Seymur Mir Mustafa, Baku, AZ1112 (AZ); SEYIDZADEH, Aliazhdar Ahmad, Baku, AZ1009 (AZ); SEYIDOV, Hikmat Mirbagir, Baku, AZ1045 (AZ); MIRZOYEV, Ilkin Ahmadagha, Baku, AZ1076 (AZ); BARZIGYAR, Ruslan Talib, Baku, AZ1090 (AZ); RUSTAMOV, Samir Sabir, Baku, AZ1045 (AZ)
(74) Representative: Jeck, Anton
(86) International application number: PCT/AZ2018/000011
(87) International publication number: WO 2019/195898

(57) **Abstract**

The proposed invention relates to the field of virtual aircraft simulators and can be used to educate and train aircraft pilots flying solo or in conjunction with another pilot, instructor, and air-traffic controller. The device contains a capsule installed on a computerized mechanical platform providing up to six degrees of freedom of real-time movement, and a pilot seat. To simulate the real sensations of the pilot more closely, the capsule may also be equipped with a control stick, one or more thrust levers, and pedals. The stereo glasses are used to create a virtual reality.

The objective of the proposed invention is to improve the functionality of the simulator by introducing a virtual avatar with artificial intelligence, which, when performing a joint flight with a trainee, can replicate the actions of a captain, co-pilot, air-traffic controller, or instructor. The avatar is also capable of maintaining a verbal dialogue with the trainee within the scope of a standard pilot communication protocol thesaurus. The device can be used for any aircraft type without changing the hardware.

## Description

The proposed invention relates to the field of virtual flight simulators and can be used for educating and training aircraft pilots flying solo or in conjunction with another pilot, instructor or air traffic controller.

An individual professional simulator is designed to be used as a training tool by professional pilots. Typically, the basis of a flight simulator is a natural cockpit. The cockpit is equipped with real instruments, *control handles, switches and pedals.* The real-time view in the windows is created using the software. The gravitational force is simulated using a *mechanical device that rotates and tilts the cockpit* [1, 2]. *Italicized* are the features specific to the subject of the proposed invention. The disadvantages of the professional flight simulator are the following: significant cost (tens of millions of dollars); design specifics for each aircraft model, such as each model of Boeing, Air-bus, Embraer, etc.; considerable size and high-cost maintenance limit the number of flight simulators installed and operated in the aviation industry. As a result, pilots have limited time to practice on the simulators to improve their piloting skills. On average, they get no more than ten hours per year.

Due to the development of personal computers and digital devices, it became possible to create universal flight simulators, which are essentially as good as the current commercial flight simulators, but an order of magnitude cheaper.

A personal virtual flight simulator is known [2], comprising a workplace in the real cockpit, which contains *an aircraft control stick*; pedals; thrust lever; brake levers; flap and landing gear; roll, pitch, course and engine control sensors; adapter; *notebook, pilot's protective helmet with virtual goggles and positioning unit.* This virtual simulator has the following disadvantages: training pilots on individual types of aircraft requires separate real aircraft cockpits, which makes such simulator non-universal and prevents it from being used in certain large training areas; there is no voice recognition means to enable voice control.

Another full flight simulator (FFS) is known [3], comprising an aircraft's onboard equipment set coupled via two-way connection with the *aircraft's onboard equipment system simulation unit, aircraft dynamics simulation unit, instructor unit,* and *database unit,* a data packet router containing data exchange units with the inputs serving as corresponding inputs of the data packet router, system-based object display units, system-based object display presentation units, and a simulator task manager with the simulator configurator and simulator problem protection unit connected to the inputs thereof. There are also onboard equipment system simulation units, an aircraft dynamics simulation unit, instructor unit, database unit, and system-based object display units. The simulator task manager is connected to the inputs and outputs of the data packet router. The simulator may further contain an *acceleration effect simulation unit, comprising a platform* for installing an aircraft's onboard equipment set as part of the real cockpit, equipped with a control unit and connected to the router.

The disadvantage of the FFS is that the simulator and its simulation software are not designed for maneuverable aircraft, and there is no voice command recognition means for voice control.

The methods for creating virtual objects for stereo glasses are also known [4], which track moving objects and create virtual 3D objects based thereon. One or several instructors can be tracked in order to register their actions when performing one or more tasks. A virtual reality simulator receives recorded tracked data of the instructor movements, and can then create their dynamic avatars in 3D virtual reality. The visualization system displays virtual reality for one or more trainees using one or more displays, which can be used by one or more trainees to analyze one or more of the performed tasks. The devices include 3D virtual reality systems and methods (telepresence), such as stereo glasses and multi-displays.

The disadvantages of this device include the absence of automated artificial intelligence avatar and the lack of a movable platform simulating the acceleration experienced by the pilot during the real flight.

The closest to the claimed object in terms of the technical substance is the virtual reality system [5]. A motion simulation device allows creating movements with six degrees of freedom: three rotational and three linear-translational degrees of freedom. The motion simulation device comprises a *spherical capsule, which is supported on a movable platform by rollers* and is, in turn, connected with a *movable frame*, which ultimately allows creating a rotational movement of the capsule in any direction. The frame can be attached to several posts of the actuators capable of moving the frame along three orthogonal axes. The capsule is provided with a control stick, pedals, control panels and displays, pilot's seat, a set of seat belts, visual head-mounted display, and aheadphone and microphone headset. The field of view, sounds, and physical sensations can be electronic and reproduced within the capsule so that the user can interactively control and respond to various conditions while experiencing a simultaneous movement and physical sensations associated with the environment.

The lack of voice recognition means for enabling voice control of the virtual avatar replacing the functions of a captain, co-pilot, instructor or air-traffic controller are considered to be the disadvantages of this device.

The objective of the proposed invention is to further improve the functionality of the simulator compared to the existing devices. The most important function is to use the elements of artificial intelligence to reduce the number of personnel required to maintain the normal functioning of the simulator while improving the quality of the pilot training process. For example, speech-enabled avatars with the artificial intelligence elements, which are actually present visually in the 3D virtual space of the simulator, can imitate any of the simulator team members, aircraft captain, co-pilot, air-traffic controllers, and instructor. This enables a further reduction in the cost of pilot education and training.

The technical result is achieved by the fact that the functions of the captain or co-pilot, instructor or air-traffic controller with respect to the relevant commands are performed by the artificial intelligence based on the voice and video image recognition means for enabling voice control.

A universal virtual simulator comprises one or two pilot seats installed on a computerized movable mechanical software-equipped platform, which provides up to six degrees of freedom in the real-time. Depending on the type of the aircraft and pilot training levels, the platform can also be provided with removable control sticks, joysticks, pedals, and one or more thrust levers. The pilot uses stereo glasses to immerse into a virtual reality, a microphone and headphones linked to a mathematical support of a voice command recognition, 3D virtual pilot avatars with dynamic face, head, arms and legs imitation, electronic and software means to create avatars resembling real pilots, a helmet with built-in sensors for recording encephalograms to monitor the neurological and physiological condition of the pilots (for example, to assess the degree of alertness and ability to adequately control their legs and hands).

The virtual reality stereo glasses are equipped with additional sensors, such as eye tracker for both eyes; RGB front-view video camera (or stereo camera); camera for determining distances to objects in the scene; head position and orientation sensors; haptic gloves and other tools for arms and legs allowing to simulate the virtual touch sensations; computer and software performing virtual reality simulation.

The stereo image of the cockpit instruments is generated in accordance with the type of the aircraft and then transmitted to the stereo glasses (heap-mounted device - HMD). The image in the stereo glasses depends on the position and orientation of the pilot's head. Depending on the type of utilized HMD, their spatial position is determined by the sensors installed directly on the HMD, and frequently with the support of the external HMD tracking devices. The more advanced HMD includes the front-view cameras, which allow turning on the real 3D images of the pilot's arms and legs (as well as rudders, joysticks and pedals) in the virtual cockpit (augmented reality). The eye-tracking device is also used for optimal 3D visualization.

In the absence of front-view cameras, the pilot's hands are synthesized and placed into a virtual cockpit in accordance with the hands and fingers position sensors [10].

The augmented reality methods are used to include a real 3Dimage of the pilot's legs into the virtual cockpit image. If the stereo glasses are not equipped with the augmented reality sensors, the 3D image of the legs is synthesized based on the pedal sensors.

The calculated virtual 3D image of the hand palms, fingers, and feet of the pilot is used to simulate the pilot's manipulation of the virtual buttons, handles, and other simulated manipulators in the cockpit. If haptic gloves are used, the virtual touch is transmitted to the gloves to generate a response to the touch by hands and feet. In case of two pilots conducting a joint flight, a 3D avatar of the other pilot is created in the corresponding seat of the virtual cockpit (i.e., in the glasses of the second pilot, the avatar of the first pilot is placed in the seat of the first pilot, and vice versa, in the glasses of the first pilot, the avatar of the second pilot is placed in the seat of the second pilot). The 3D images of the actual position of the hands of both pilots are combined and converted into the final image in the stereo glasses of both pilots. Flight synchronization between the workplaces of the pilots (and instructor, if present) is performed locally (using USB or Ethernet communication channels), or via the Internet.

A flexible helmet with built-in sensors ensures the positioning of the EEG sensors on the pilot's head (for example, a brain helmet [6-8]). It is used to record a real-time multichannel oscillogram of the brain activity, which allows recognizing the trainee's degree of focusing while performing the aircraft operation tasks. The recorded electrical brain activity is also used to monitor the pilot's health (if the pilot fell asleep, lost consciousness and other physiological characteristics of the nervous activity). It is possible that the oscillogram in combination with the trainee's eye-tracking system and speech commands can be used to perform the aircraft operation tasks, such as activating switches on the cockpit panel directly using the brain action currents, i.e. without hands.

The simulator's technical support also includes haptic devices for hands, which make it possible to create a physical sensation of touching the virtual control devices in the aircraft cockpit with hands and fingers [9].

The software of the invention includes the simulations of aircraft motion control, flight direction, engine, and landing gear control. By using a computer model of a specific aircraft, the software calculates the aircraft response to the pilot's control actions by generating sounds from wind, engines, and other sources. The software also includes the simulation of the aircraft's onboard software and avatar voice recognition (with the artificial intelligence elements) to control the aircraft. The software utilizes a database of ground images and generates a stereo image depending on the altitude and position of the aircraft, as well as the position of the pilot relative to the cockpit window. The generated stereo image is then transmitted to the stereo glasses.

The artificial intelligence of voice and visual control included in the simulator complex allows performing an individual as well as group training of the aircraft captain, co-pilot, instructor or air-traffic controller, and eliminates the mandatory presence of these individuals during the simulator training. Thus, one pilot of a multiple crew aircraft can perform an individual training, where the functions and tasks of another pilot, instructor, and air-traffic controller are performed by the corresponding avatars utilizing artificial intelligence for voice and visual interaction with the pilot in training. This makes it possible to achieve more unified training and reduce the total training cost.

### REFERENCES

1. Model based control of a flight simulator motion system. www.dcsc.tudelft.nl/Research/Publication Files/publication-5738.pdf
2. Patent RU2361281, Int. CI. G09B 9/32, Personal virtual pilot training simulator, V.P. Merkulov, V.K. Zakharov, V.Ya. Maklashevskiy, K.S. Vislyaev, and A.S. Yuritsyn, Bulletin No. 19, July 10, 2009.
3. Patent RU2280287, Int. CI. G09B 9/02, G09B 9/02,Complex aircraft simulator,V.A. Godunov, A.S. Pochivalov, A.V. Shapalov, and A.V. Bondurin, Bulletin No. 20, July 20, 2006.
4. Patent US8,624,924 B2, Int. CI. G09G 5/00,Portable immersive environment using motion capture and head mounted display, M.K. Dobbins, P. Rondot, E. Shone, M. Yokel, K.J. Abshire, A.R. Harbor Sr., S. Lovell, and M.K. Barron, Lockheed Martin Corporation, January18, 2008; Appl. No.: 61/022,185.
5. Patent US5,490,784, Int. CI. G09B 9/00, Virtual reality system with enhanced sensory apparatus, D.E. Carmein, February 23, 1996; Appl. No.: 145,413.
6. Patent US2005/107,716 A1, Methods and apparatus for positioning and retrieving information from a plurality of brain activity sensors.
7. PatentUS7,547,284 B2, Bilateral differential pulse method for measuring brain activity.
8. B.W. Johnson, S. Crain, R. Thornton, G. Tesan, and M. Reid, Measurement of brain function in pre-school children using a custom sized whole-head MEG sensor array.
9. https://www.roadtovr.com/exos-haptic-vr-exoskeleton-glove-aims-deliver-practical-touch-feedback/https://techcrunch.com/2017/02/09/oculus-gloves/
10.https://www.oculus.com/

## Claims

1. A universal virtual simulator, comprising one or two pilot seats installed on a movable platform, a set of seat belts, a headphone and microphone headset, 3D virtual reality glasses, a control stick, one or more thrust levers, pedals, electronic means for registering the position of pilot's hands, head and legs, pilot's bio-field sensors, and a personal computer for creating a virtual flight simulation, *wherein* said simulator is further provided with static and dynamic3D cameras and scanners, a flexible head-cap with built-in sensors, as well as intelligent avatars capable of performing the functions of an instructor, captain, co-pilot, or air-traffic controller based on corresponding commands and programs by utilizing the artificial intelligence methods for voice and visual control.

2. A training method using an intelligent avatar-instructor, comprising the features according to claim 1, *wherein* the computer-based virtual simulator with numerous audio, video and digital sources of information connected thereto from any and all simulator systems and various manual, cardiologic, head, and eye-based biomedical sensors of the captain, co-pilot, air-traffic controller, or other examinees makes it possible to: create unforeseen situations (simulate failures of various systems, units, and devices; complex meteorological problems; spatial disorientation conditions); as an independent expert, monitor and assess the consistency of following the operating procedures and the psycho-physiological condition of the captain, co-pilot, air-traffic controller, or other examinees; teach how to correctly and consistently perform the functions to ensure the optimal prevention of an emergency situation and achieving the specified aircraft control modes; perform flight training based on visual rules and instruments during various malfunctions and problems, as well as during visual illusion of the pilots; for continuous improvement of the method, system training and updating with new flight data is performed.

3. A method of operating an automated unmanned or single-pilot commercial, as well as military aircraft using an intelligent avatar, comprising the features of claim 1, *wherein* the optimal aircraft operation (fuel economy and other optimizations) is performed by a virtual aircraft cockpit provided with a virtual avatar; a computer with numerous audio, video and digital information sources connected thereto from all cockpit and aircraft systems, including a "black box", ground weight and center-of-gravity measurement systems, systems of communication with an air-traffic controller, crew and passengers, a simulator-based experienced instructor flight database with the simulation of various failures of aircraft systems and units, an aircraft system and unit diagnostics and forecasting unit based on the measurement of the dynamic characteristics of the aircraft systems (various operating parameters, vibrations, temperatures, pressures, revolutions, sounds, etc.);and intelligent and automated control units.
